(19)

Europäisches Patentamt

European Patent Office

Office européen des brevets

(11) **EP 4 551 412 B1**

(12) **EUROPEAN PATENT SPECIFICATION**

(45) Date of publication and mention
of the grant of the patent:
**31.12.2025 Bulletin 2026/01**

(21) Application number: **23739682.5**

(22) Date of filing: **27.06.2023**

(51) International Patent Classification (IPC):
**B60C 11/03** (2006.01)     **B60C 11/13** (2006.01)

(52) Cooperative Patent Classification (CPC):
**B60C 11/0316; B60C 11/0311; B60C 11/1376;**
B60C 2011/0313; B60C 2011/1338;
B60C 2011/1361; B60C 2200/08

(86) International application number:
**PCT/IB2023/056630**

(87) International publication number:
**WO 2024/009171 (11.01.2024 Gazette 2024/02)**

(54) **TIRE FOR VEHICLE WHEELS AND RESPECTIVE TREAD WITH SELF-CLEANING FUNCTION**

REIFEN FÜR FAHRZEUGRÄDER UND ZUGEHÖRIGE LAUFFLÄCHE MIT
SELBSTREINIGUNGSFUNKTION

PNEU POUR DES ROUES DE VÉHICULE ET BANDE DE ROULEMENT RESPECTIVE AYANT UNE
FONCTION D'AUTO-NETTOYAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.07.2022 IT 202200014134**

(43) Date of publication of application:
**14.05.2025 Bulletin 2025/20**

(73) Proprietor: **YOKOHAMA TWS SOCIETÀ PER
AZIONI**
**00019 Tivoli (RM) (IT)**

(72) Inventors:
• **ABBATI, Gianluca**
  **00034 COLLEFERRO (RM) (IT)**

• **FEBI, Gianluca**
  **00158 ROMA (RM) (IT)**
• **LASORSA, Francesco**
  **00019 TIVOLI (RM) (IT)**

(74) Representative: **Ottazzo, Marco Francesco
Agostino et al
Giambrocono & C. S.p.A.
Via Rosolino Pilo, 19/b
20129 Milano (IT)**

(56) References cited:
**EP-A1- 1 266 771     JP-A- 2007 168 684
JP-A- 2012 076 656     US-A- 4 131 148
US-A1- 2017 246 914     US-S- D 908 598**

**Description**

The present invention relates in general to the technical field of tires and, in particular, a tire for vehicle wheels whose tread has a structure designed to facilitate self-cleaning. It is specified that although the tire according to the present invention has been developed with reference to the field of tires for agricultural use, the structure of this tire can also be applied to other tires for any type of vehicle.

Agricultural tractors, or other similar vehicles, are usually destined to work on friable, slippery (such as wet grass) and/or muddy ground. To be suitable for this type of off-road use, the tires for the wheels of agricultural tractors or other similar vehicles are normally provided with a tread characterized by the presence of a plurality of lugs (generally called "studs") of various height, which protrude from the surface of the tread.

During use of the vehicle, in particular on friable, slippery and/or muddy ground, the lugs of the tread sink more or less completely into the ground to ensure traction. Consequently, the traction capacity of each tire depends, as well as on various intrinsic and extrinsic factors, also on the self-cleaning features of the respective tread, which influence both the degree of penetration of the lugs into the ground, and the possibility for each lug to maintain as high as possible the penetration time in the ground.

Therefore, tires for agricultural tractors or other similar vehicles must have good self-cleaning properties, above all when these vehicles operate on friable, slippery and/or muddy ground. If mud or other debris infiltrates the grooves provided between the lugs of the tread, remaining attached to the tires while the vehicle is moving, losses of traction and an increase in the probability of slippage can in fact occur.

If mud or other debris were not expelled successfully due to the self-cleaning properties of the tire, operators would have to remove this material manually before the vehicle travels on paved roads, in compliance with road safety regulations. Therefore, an increase in the self-cleaning properties of each tire also results in an increase in the overall operating efficiency of the vehicle.

Consequently, numerous examples of tread structures for vehicle wheels have been designed to facilitate self-cleaning. For example, document CN 210211917 U discloses a tire for vehicle wheels whose tread is provided with three reinforcing ribs, shaped in steps, obtained on each groove interposed between adjacent pairs of lugs. These ribs are arranged on the bottom of each groove and hence do not extend along the front and/or rear surfaces of the lugs.

Document CN 206765716 U discloses a tire for vehicle wheels whose tread is provided with a discontinuity on each groove interposed between pairs of adjacent lugs. This discontinuity extends according to a broken line and has a variable height. This discontinuity remains confined within the respective groove.

Document EP 2658732 A1 discloses a tire for vehicle wheels wherein the internal part of the tread, located between pairs of adjacent lugs, is divided into two axially adjacent surfaces. The two surfaces are at least partially arranged at different radial heights, so as to form at least one step that extends in transverse direction. This step ends in the lower part of the lugs.

Document EP 2531362 A1 discloses a tire for vehicle wheels wherein the internal part of the tread, located between pairs of adjacent lugs, is once again divided into two axially adjacent surfaces and separated by a step. The step extends parallel to the walls of the lugs, substantially from the central portion towards the shoulder portions of the tread.

Document JP 2007-168684 A discloses a tire for vehicle wheels wherein the internal part of the tread, located between pairs of adjacent lugs, has reinforcing ribs. There ribs run longitudinally along the groove between the lugs, following different types of geometry (straight, broken, undulated line), ending at the base of the lugs. From Figures 9 and 10 of document JP 2007-168684 A it can be seen that, when sectioned with a transverse plane, the ribs 130, 132 increase the height of the base surface 128 according to the dimension "TB". After this, the surface of each rib 130, 132 maintains the same curve as the aforesaid base surface 128.

Document EP 1266771 A1 discloses a tire for vehicle wheels wherein the internal part of the tread, located between pairs of adjacent lugs, has reinforcing ribs. These ribs propagate in the groove between the lugs following a non-geometrically defined texture, ending at the base of the lugs. From Figure 3 of document EP 1266771 A1 it can be seen that, when sectioned with a transverse plane, the ribs increase the height of the base surface 13, ending with a point 15.

Document JP 2012-076656 A discloses a tire for vehicle wheels wherein the internal part of the tread, located between pairs of adjacent lugs, has an undulated surface geometry in transverse direction. This geometry (visible in Figures 6 and 7 of document JP 2012-076656 A) runs longitudinally along the groove between the lugs 24, 18 and extends on one side along the front surface 12B of the lugs to the edge of the upper surface 12A of the aforesaid lugs. On the other side, the undulated surface ends at the base of the rear surface of the subsequent lug 12D. This undulated surface is continuous (in the mathematical sense of the word), and therefore has no points or other discontinuities characterized by an unconnected edge.

Document US 4131148 A discloses a tire for vehicle wheels wherein the internal part of the tread, located between pairs of adjacent lugs, has reinforcing ribs. These ribs run in a substantially longitudinal direction along the groove between the lugs, following a geometry with a continuous line, whether straight or slightly curved, extending also on the front and rear surfaces, respectively, of the lugs involved, but without reaching the edge of the upper surface. From Figures 1 and 2 of document US 4131148 A it can be seen that, if sectioned with a transverse plane, the ribs 5, 5' increase the height of the base surface 4 ending with a point T, T'.

Document US 2017/246914 A1 discloses a tire for vehicle wheels wherein the internal part of the tread, located between pairs of adjacent lugs, has reinforcing ribs. As shown in Figure 2 of document US 2017/246914 A1, these ribs extend along the front or rear wall 104 of the lugs, graze the edge of the upper surface 112, and only partially propagate into the groove between the lugs 102-106, in longitudinal or transverse direction. The geometry of the ribs has lateral walls 108, the angle of which cleanly interrupts the continuity of the adjacent surfaces 102-104-106, ending in a saw-edge surface 110. These ribs are thus configured as protrusions of the lugs, which intermittently interrupt the continuity of the adjacent surfaces 102-104-106.

Finally, document US D908598 S discloses a tire for vehicle wheels wherein the internal part of the tread, located between pairs of adjacent lugs, has reinforcing ribs. Similarly to document US 4131148 A, also in document US D908598 S the ribs run along the groove between the lugs in a substantially longitudinal direction, following a geometry with a continuous line, whether straight or slightly curved. Again similarly to document US 4131148 A, the ribs increase the height of the base surface terminating with a tip. However, unlike document US 4131148 A, the ribs are interrupted on the base of the front and rear surfaces, respectively, of the lugs involved.

Although the discontinuities obtained on the tires for vehicle wheels according to the prior art listed above have different geometries, all these discontinuities extend mainly on the bottom of each groove of the tread. In other words, the start and end points of these discontinuities are always placed in the space between pairs of adjacent lugs, or at the base of these lugs. The applicant has observed that these geometries can be improved in order to obtain an improvement of the self-cleaning properties of the respective tire.

Therefore, the object of the present invention is to provide a tire for vehicle wheels that is capable of solving the aforesaid problems of the prior art in a very simple, economical and particularly functional manner.

In detail, an object of the present invention is to provide a tire for vehicle wheels wherein, with respect to similar tires according to the prior art, the self-cleaning features of the respective tread are increased.

Another object of the present invention is to provide a tire for vehicle wheels that allows the overall operating efficiency of the vehicle on which the tire is mounted to be increased.

These and other objects according to the present invention are achieved by providing a tire for vehicle wheels as set forth in claim 1.

Further features of the invention are highlighted in the dependent claims, which form an integral part of the present description.

The features and the advantages of a tire for vehicle wheels according to the present invention will be more evident from the following description, provided by way of non-limiting example, with reference to the accompanying schematic drawings, wherein:

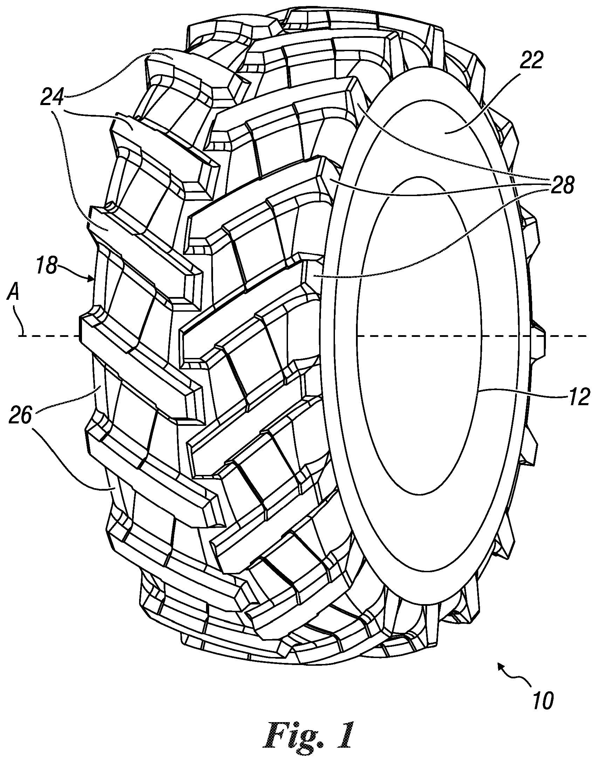

Figure 1 is a perspective view of a first embodiment of a tire for vehicle wheels according to the present invention;
Figure 2 is a front view of the tire of Figure 1;
Figure 3 is another perspective view of the tire of Figure 1;
Figure 4 is an enlarged plan view of the detail indicated with D in Figure 3;
Figure 5 is an enlarged perspective view of the detail indicated with D in Figure 3;
Figure 6 is another enlarged perspective view of the detail indicated with D in Figure 3;
Figure 7A is a section view obtained projecting the lines A-A and B-B of Figure 6 on the same plane;
Figure 7B is a section view derived from Figure 7A, by matching the segments 44A with 44B and 46A with 46B, which shows the difference in level due to the discontinuity in terms both of height H, and of width L;
Figure 8 is a perspective view of a second embodiment of a tire for vehicle wheels according to the present invention;
Figure 9 is another perspective view of the tire of Figure 8;
Figure 10 is an enlarged perspective view of a detail of the tire of Figure 8;
Figure 11 is an enlarged perspective view that shows a third embodiment of a tire for vehicle wheels according to the present invention; and
Figure 12 is an enlarged perspective view that shows a fourth embodiment of a tire for vehicle wheels according to the present invention.

With reference to the figures, these show some embodiments of a tire 10 for vehicle wheels according to the present invention. The tire 10 can be of any type known in the state of the art and can be suitable for use on different categories of vehicle. By way of non-limiting example, the accompanying figures show a tire 10 of the type specifically destined for use on agricultural vehicles.

Again in a known manner, the tire 10 consists of an internally hollow and substantially toroidal-shaped structure, which extends around an axis of rotation A. The structure of the tire 10 thus comprises a pair of axially opposite end flaps 12, 14 with circumferential extension. These end flaps 12, 14, which form the "bead" of the tire 10, are designed to engage tightly with a rim (not shown) of a vehicle, to allow the tire 10 to be fitted on said rim.

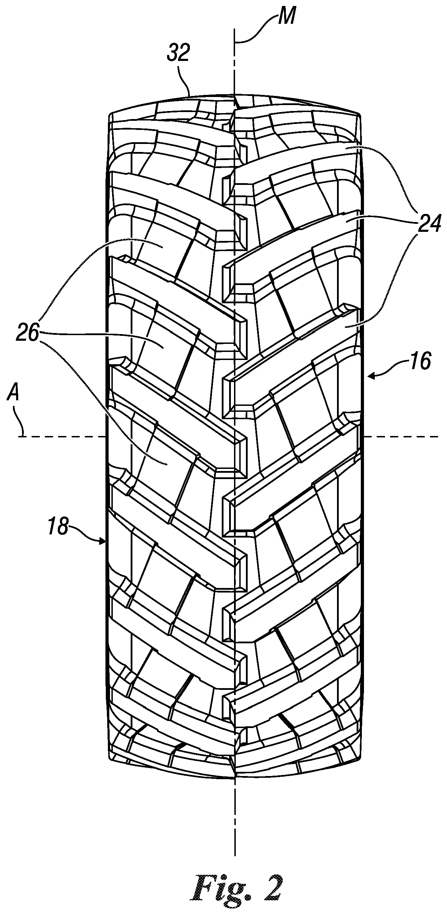

The structure of the tire 10 further comprises a circumferential belt structure 16 (Figure 2), which is externally provided with a tread portion 18 and is internally provided with an internal base wall 20 of the tire 10. A belt system (not shown), normally consisting of an assembly of multiple layers comprising fabric or metal material, interwoven in various ways, can be interposed between the tread portion 18 and the internal base wall 20. The structure of the tire 10 further comprises a pair of opposite sidewalls 22 with circumferential extension along a radial surface. Each sidewall 22 extends between a respective end flap 12, 14 and the belt structure 16.

The tread portion 18 comprises a plurality of lugs 24 and a plurality of grooves 26. Each groove 26 is interposed between contiguous pairs of lugs 24, has a circumferential surface and is placed at a distance from the axis of rotation A which is less than the distance of each lug 24 from this axis of rotation A. In other words, each groove 26 is defined as the space comprised between the lugs 24.

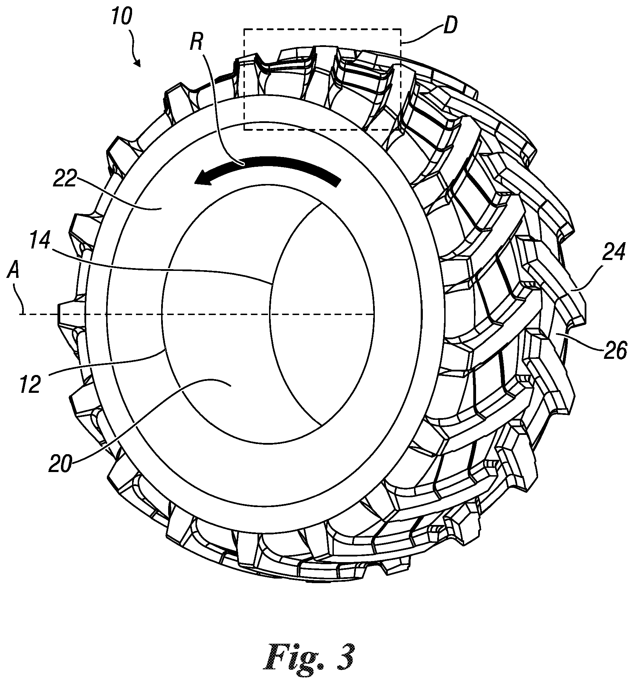

Each lug 24 is provided with an external surface 28, which is placed above a respective sidewall 22 of the tire 10 and which is called shoulder of the lug. The geometry of the lugs 24 defines the direction of rotation R (Figure 3) of the tire 10. The circumferential centerline M, which is placed at the center of the tread portion 18 and which is perpendicular to the axis of rotation A, is called centerline of the tire 10.

Each lug 24 comprises:

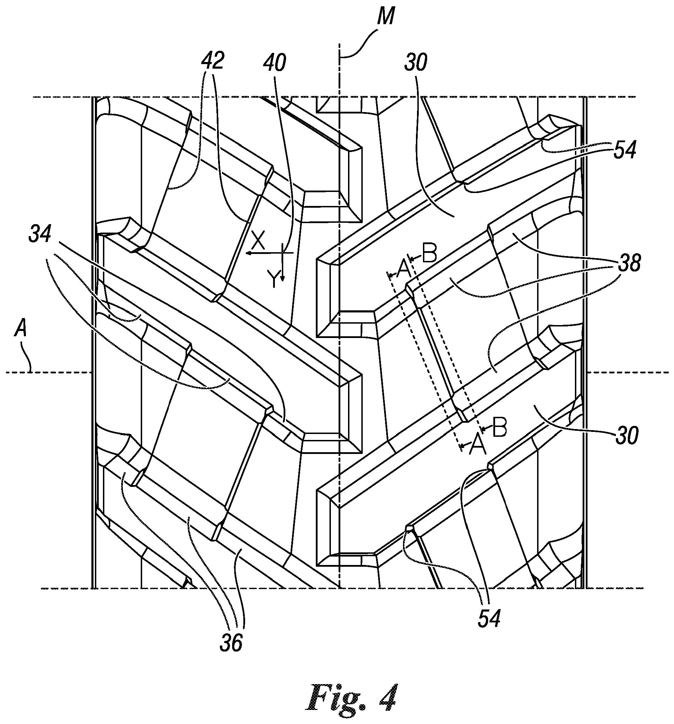

- at least one circumferential upper surface 30 (Figure 4), called crown of the lug 24 and which has a predefined curve, called crown radius 32 (Figure 2);
- at least one radial front surface 34, which is placed on the front side of a respective lug 24 according to the direction of rotation R of the tire 10;
- at least one radial rear surface 36, which is placed on the front side of a respective lug 24 according to the direction of rotation R of the tire 10; and
- at least one base or bottom surface 38, which connects each radial front surface 34 and each radial rear surface 36 with a respective adjacent groove 26 and which is normally rounded.

It is specified that the term "circumferential" is meant to indicate any line or surface of the tire 10 that extends substantially parallel to the plane on which the belt structure 16, and hence also the tread portion 18, extends, while the term "radial" is meant to indicate any line or surface of the tire 10 that extends substantially perpendicular to the plane on which the belt structure 16, and hence also the tread portion 18, extends, as is the case, for example, of the sidewalls 22. In this way, for example, the radial front 34 and rear 36 surfaces of a given lug 24 are substantially perpendicular both to the circumferential upper surface 30 of said lug 24, and to the circumferential surfaces of the grooves 26 adjacent to this lug 24.

The tread structure of the tire 10 according to the present invention has a specific geometry both of the lugs 24, and of the grooves 26. For convenience, a two-dimensional Cartesian reference system 40 (Figure 3) is set for each groove 26. In detail, each groove 26 is oriented according to this two-dimensional Cartesian reference system 40 along a transverse direction X of the groove 26, which is parallel to the axis of rotation A of the tire 10 and hence is perpendicular to the rolling direction of said tire 10, and along a longitudinal direction Y of the groove 26, which is perpendicular to the axis of rotation A of the tire 10 and hence is parallel to the rolling direction of said tire 10.

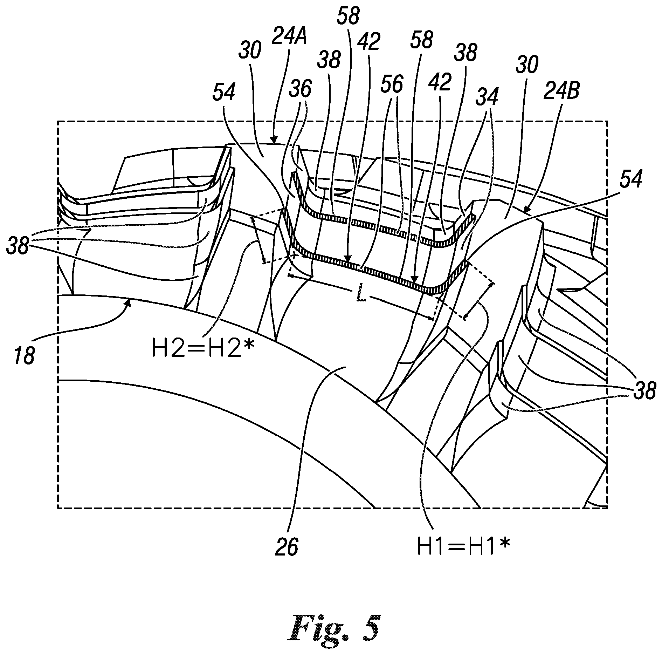

One or more discontinuities 42 are obtained on at least part of the grooves 26. The term "discontinuity" defines all the surfaces that create a step shaped in such a way as to interrupt the surface continuity of each groove 26 in transverse X and/or longitudinal Y directions. According to the invention, each discontinuity 42 not only at least partially crosses the respective groove 26 along a direction substantially parallel to the longitudinal direction Y, but also extends, again along the same direction substantially parallel to said longitudinal direction Y, over at least part of the base surface 38, over at least part of the radial front surface 34 and/or over at least part of the radial rear surface 36 of each lug 24 adjacent to the groove 26 on which said discontinuity 42 is obtained. In particular, as shown in Figures 5, 6 and 10-12, each discontinuity 42 consists of a step that is provided with a flat wall 56 lying on a radial plane. This flat wall 56 forms a sharp edge 58 with the surface of the groove 26, as well as with at least part of the base surface 38, with at least part of the radial front surface 34 and/or with at least part of the radial rear surface 36 of each lug 24 adjacent to the groove 26 on which the discontinuity 42 is obtained, interrupting the surface continuity in the transverse X and/or longitudinal Y directions both of the grooves 26, and of the base 38, front 34 and rear 36 surfaces of the lugs 24.

With reference to the first embodiment of the tire 10 shown in the enlarged view of Figure 5, it can be observed that each discontinuity 42 is highlighted with a filled area. According to this first embodiment of the tire 10, each discontinuity 42 starts at the upper edge of the upper surface or crown 30 of a first lug 24A, moves downwards along the rear surface 36 and the base or bottom surface 38 of this first lug 24A, crosses the groove 26 adjacent to this first lug 24A and goes upwards along the base or bottom surface 38 and the front surface 34 of a second lug 24B subsequent with respect to the first lug 24A (with reference to the direction of rotation R of the tire 10), until reaching the upper surface or crown 30 of this second lug 24B.

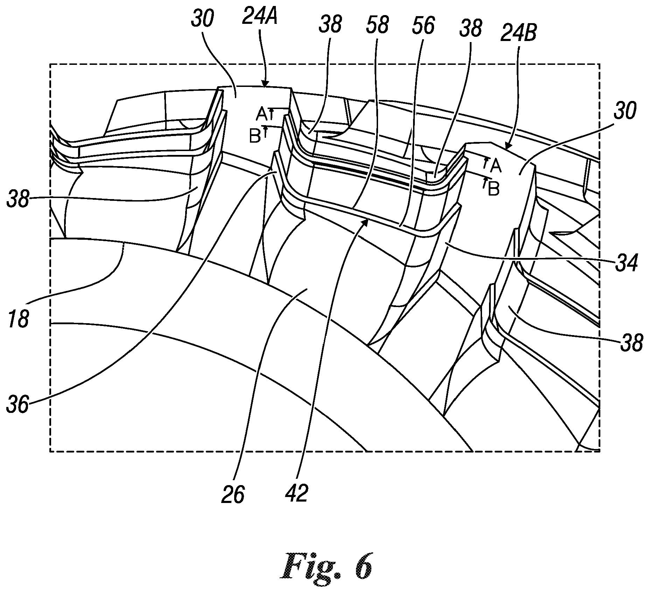

Regardless of the embodiment of the tire 10, but for convenience with reference to the enlarged views of Figures 5 and 6, it can be observed that at least two discontinuities 42 are preferably obtained on each groove 26. These at least two discontinuities 42 are shaped in such a manner that each discontinuity 42 causes a progressive increase, along the longitudinal direction Y and starting from the circumferential centerline M continuing towards a respective sidewall 22 of the tire 10, in the distance L between the rear surface 36 of the first lug 24A and the front surface 34 of the second lug 24B.

In other words, the discontinuities 42 of each groove 26 are shaped so as to form a channel of a width diverging starting from the circumferential centerline M and continuing towards a respective sidewall 22 of the tire 10. This channel, along which the material deposited on the tread portion 18 runs in the manner set forth below, is delimited by the base surface of the groove 26 and by the front 34 and rear 36 surfaces of respective contiguous lugs 24A and 24B.

Thanks to the particular shape both of the discontinuities 42, and of this channel, break-up of the clumps of soil or other material that can deposit in each groove 26 between contiguous lugs 24 is facilitated, aiding self-cleaning of the tread portion 18 of the tire 10. While the tire 10 is rolling, the material deposited on the tread portion 18 is expelled through gravity and through deformation of said tire 10. Moreover, this material is forced to flow along each groove 26, in transverse direction X, due to the rolling torque of the tire 10 and to the directional geometry of the lugs 24. This material is thus expelled when it reaches the sidewalls or shoulders 22 of the tire 10. Consequently, the object of improving the flow of material in the grooves 26 is achieved with the aid of the discontinuities 42 shaped according to the present invention.

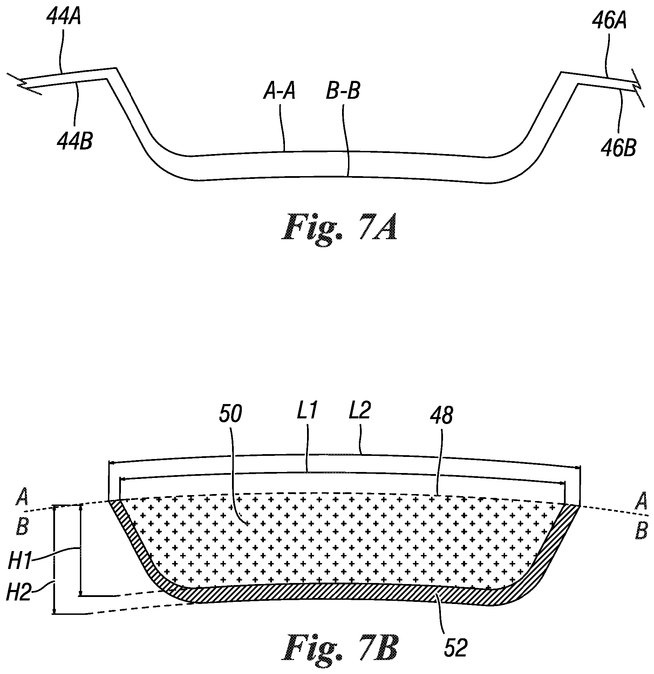

Considering Figure 6, the section line A-A intersects the groove 26 before the discontinuity 42, with reference to the position of the circumferential centerline M, while the section line B-B intersects the groove 26 after the discontinuity 42. These two section lines A-A and B-B can be compared in Figure 7A, where the two section lines A-A and B-B are projected on the same plane.

In Figure 7B the segments 44A, 44B and 46A, 46B of each section line A-A and B-B, which intersect the upper surface 30 of respective contiguous lugs 24A and 24B, are instead made to coincide. In actual fact these segments 44A, 44B and 46A, 46B would have different heights with respect to the axis of rotation A, due to the crown radius 32 (curvature) of the tire 10. In Figure 7B the broken line 48 indicates an imaginary extension of the crown radius 32 of the tire 10, while the area 50 filled with small crosses represents the section of the channel of the groove 26 obtained before the discontinuity 42. If we add to this the portion of area 52 with diagonal lines, we will obtain the section of the channel obtained after the discontinuity 42.

As shown in Figure 7B, after the discontinuity 42 the section of the channel increases both in width (L2 > L1), and in height (H2 > H1). As mentioned previously, this discontinuity 42 creates a progressive widening of the groove 26 in longitudinal direction Y, and a "slide" in transverse direction X. This allows the material deposited to flow out from the grooves 26 more easily, improving the self-cleaning features of the tread portion 18.

Another effect of the discontinuities 42 that end at the edge of the upper surface 30 of each lug 24 is that of modifying the design of the contact surface with the ground of the tread portion 18. The point of intersection 54 (Figure 4) between each discontinuity 42 and the upper surface 30 of each lug 24, 24A, 24B forms a pointed edge of this lug 24, 24A, 24B, which is designed to increase the grip and stability features of the tire 10. By adding several pointed edges 54, or "biting" edges, for each lug 24, 24A, 24B the grip and stability of the tire 10 will consequently be increased.

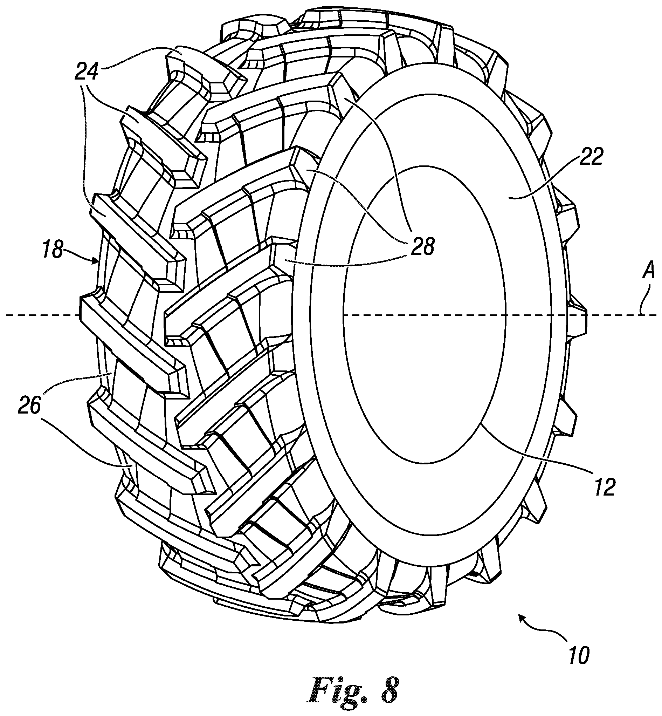

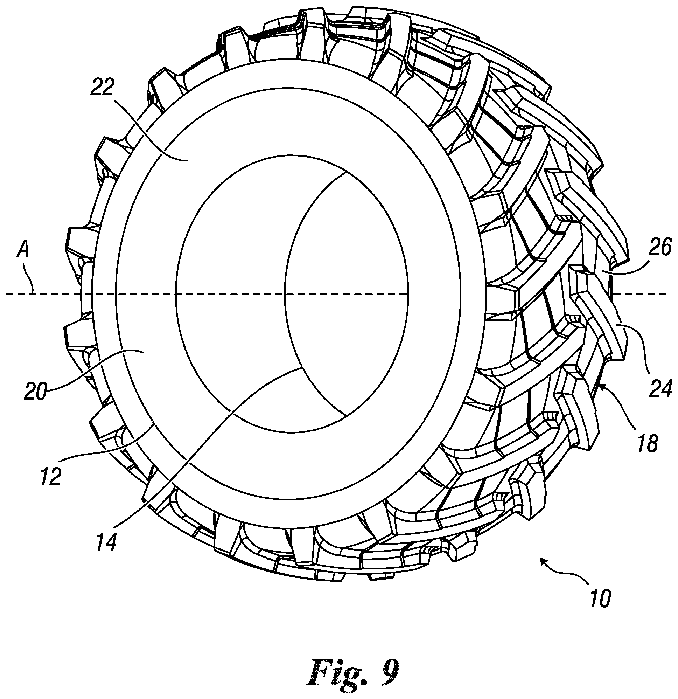

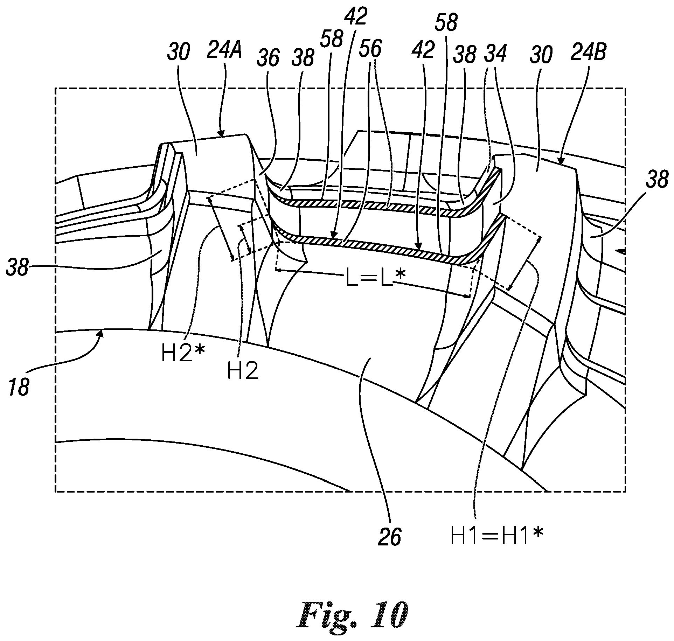

With reference to Figures 8, 9 and 10 these show a second embodiment of a tire for vehicle wheels according to the present invention. According to this second embodiment of the tire 10, as for example shown in Figure 10, each discontinuity 42 starts at the edge of the upper surface or crown 30 of a second lug 24B, moves downwards along the front surface 34 and the base or bottom surface 38 of this second lug 24B, crosses the groove 26 adjacent to this second lug 24B and only partially goes upwards along the base or bottom surface 38 and the rear surface 36 of a first lug 24A preceding the second lug 24B (with reference to the direction of rotation R of the tire 10).

In other words, each discontinuity 42 can extend up to the upper surface or crown 30 of a given lug 24 only on one side of the respective groove 26, remaining instead only partially extended on the other side, as shown in Figures 8, 9 and 10. The discontinuity 42 is complete on the front surface 34 of a given lug 24, while it is only partial on the rear surface 36 of the adjacent lug 24. According to this second embodiment of the tire 10, by defining:

- L* = distance between the front and rear surfaces of adjacent lugs;
- L = extension in transverse direction of each discontinuity in the respective groove;
- H1 = height of each discontinuity on the front surface of a specific lug;
- H2 = height of each discontinuity on the rear surface of a specific lug;
- H1* = maximum height of the front surface of a specific lug;
- H2* = maximum height of the rear surface of a specific lug,

we obtain the following:

-

$$L = L^*;$$

-

$$H1 = H1^*;$$

-

$$H2 < H2^*.$$

According to a variant (not shown) of this second embodiment of the tire 10, each discontinuity 42 could also start at the edge of the upper surface or crown 30 of a first lug 24A, move downwards along the rear surface 36 and the base or bottom surface 38 of this first lug 24A, cross the groove 26 adjacent to this first lug 24A and only partially go upwards along the base or bottom surface 38 and the front surface 34 of a second lug 24B subsequent with respect to the first lug 24B (with reference to the direction of rotation R of the tire 10). In this case, we would obtain the following:

-

$$L = L^*;$$

-

$$H1 < H1^*;$$

-

$$H2 = H2^*.$$

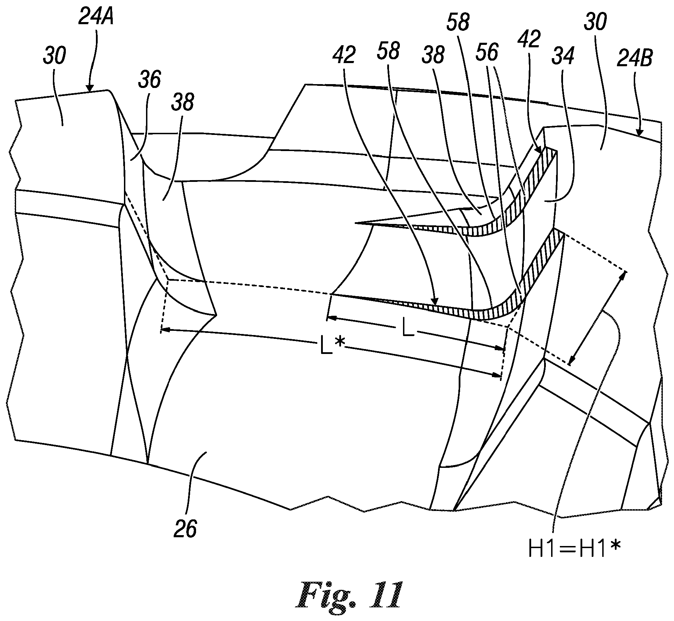

With reference to Figure 11, this shows a third embodiment of a tire for vehicle wheels according to the present invention. According to this third embodiment of the tire 10, each discontinuity 42 starts at the edge of the upper surface or crown 30 of a second lug 24B, moves downwards along the front surface 34 and the base or bottom surface 38 of this second lug 24B and only partially crosses the groove 26 adjacent to this second lug 24B. In other words, each discontinuity 42 can extend only over a given lug 24 and only partially cross the adjacent groove 26. The discontinuity 42 is therefore complete on the front surface 34 of a given lug 24, while it is only partial on the adjacent groove 26. In this case, we would obtain the following:

-

$$L < L^*;$$

-

$$H1 = H1^*.$$

According to a variant (not shown) of this third embodiment of the tire 10, each discontinuity 42 could also start at the edge of the upper surface or crown 30 of a first lug 24A, move downwards along the rear surface 36 and the base or bottom surface 38 of this first lug 24A and only partially cross the groove 26 adjacent to this first lug 24A. In this case, we would obtain the following:

-

$$L < L^*;$$

-

$$H2 = H2^*.$$

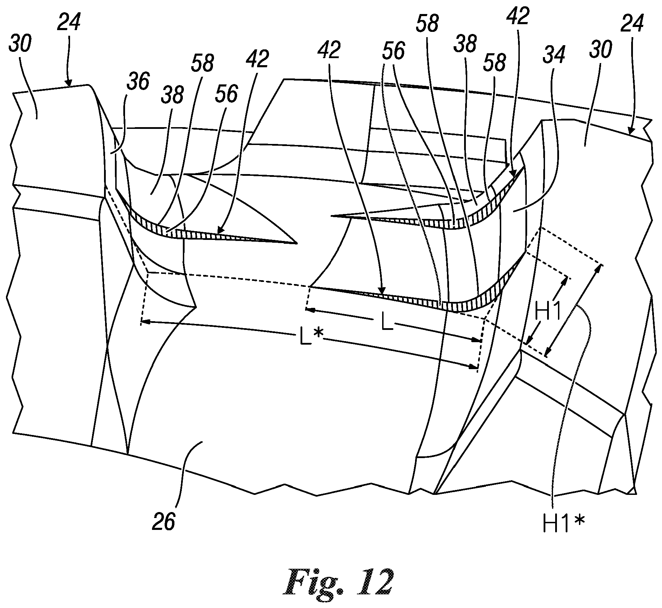

Finally, with reference to Figure 12, this shows a fourth embodiment of a tire for vehicle wheels according to the present invention. According to this fourth embodiment of the tire 10, each discontinuity 42 only partially crosses a respective groove 26 and only partially extends over at least one between the front surface 34 and the rear surface 36 of the lugs 24 that surround this groove 26. In this case there is partial discontinuity 42 both on the groove 26, and on one between the front 34 and rear 36 surfaces of the lugs 24. In this case, we would obtain the following:

-

$$L < L^*;$$

-

$$H1 < H1^*,$$

and

-

$$L < L^*;$$

-

$$H2 < H2^*.$$

It has thus been shown that with the tire for vehicle wheels according to the present invention the objects set forth above are achieved.

The tire for vehicle wheels of the present invention thus conceived is in any case susceptible to numerous modifications and variations, all falling within the scope of the inventive concept; moreover, all details can be replaced by technically equivalent elements.

For example, each discontinuity 42 could have a different geometry to those illustrated in the figures: straight line, broken line, curved line or a combination of these elements. In addition, also the depth and/or the slope of each discontinuity 42 can vary.

Finally, as already mentioned, a variable number of discontinuities 42 can be provided for each groove of the tread portion of the tire.

In practice the materials used, the forms and dimensions can be any according to technical requirements.

Therefore, the scope of protection of the invention is defined by the appended claims.

## Claims

1. A tire (10) for vehicle wheels, consisting of an internally hollow and substantially toroidal-shaped structure which extends around an axis of rotation (A), said structure comprising:

   - a pair of axially opposite end flaps (12, 14) with circumferential extension, which are arranged to engage tightly with a rim of a vehicle to allow the tire (10) to be fitted on said rim;
   - a circumferential belt structure (16), which is externally provided with a tread portion (18) and is internally provided with an internal base wall (20) of the tire (10), wherein a circumferential centerline (M), perpendicular to said axis of rotation (A), is placed at the center of said tread portion (18); and
   - a pair of opposite sidewalls (22) with circumferential extension along a radial surface, wherein each sidewall (22) extends between a respective end flap (12, 14) and said belt structure (16),

   wherein said tread portion (18) comprises a plurality of lugs (24; 24A, 24B) and a plurality of grooves (26), wherein each groove (26) is interposed between contiguous pairs of lugs (24; 24A, 24B) and has a circumferential surface, and wherein each groove (26) is placed at a distance from said axis of rotation (A) which is less than the distance of each lug (24; 24A, 24B) from said axis of rotation (A), wherein each lug (24; 24A, 24B) comprises:

   - at least one upper circumferential surface (30), which has a predefined curvature;
   - at least one radial front surface (34), which is placed on the front side of a respective lug (24; 24A, 24B) according to a direction of rotation (R) of the tire (10);
   - at least one radial rear surface (36), which is placed on the rear side of a respective lug (24; 24A, 24B) according to said direction of rotation (R) of the tire (10); and
   - at least one base surface (38), which connects each radial front surface (34) and each radial rear surface (36) with a respective adjacent groove (26),

   wherein each groove (26) is oriented according to a two-dimensional Cartesian reference system (40) along a transverse direction (X) of the groove (26), which is parallel to said axis of rotation (A), and along a longitudinal direction (Y) of the groove (26), which is perpendicular to said axis of rotation (A), and wherein one or more discontinuities (42) are obtained on at least part of said grooves (26), wherein each discontinuity at least partially crosses the respective groove (26) along a direction substantially parallel to said longitudinal direction (Y), the tire (10) being **characterized in that** each discontinuity (42) further extends, again along a direction substantially parallel to said longitudinal direction (Y), over at least part of the base surface (38), over at least part of the radial front surface (34) and/or over at least part of the radial rear surface (36) of each lug (24; 24A, 24B) adjacent to the groove (26) on which said discontinuity (42) is obtained, wherein each discontinuity (42) consists of a step that is provided with a flat wall lying on a radial plane, and wherein said flat wall (56) forms a sharp edge (58) with the surface of said groove (26), as well as with at least part of the base surface (38), with at least part of the radial front surface (34) and/or with at least part of the radial rear surface (36) of each lug (24; 24A, 24B) adjacent to the groove (26) on which said discontinuity (42) is obtained, interrupting the surface continuity in said transverse (X) and/or longitudinal (Y) directions both of the grooves (26), and of the base (38), front (34) and/or rear (36) surfaces of said lugs (24; 24A, 24B).

2. The tire (10) according to claim 1, **characterized in that** each discontinuity (42) starts at the upper surface (30) of a first lug (24A), moves downwards along the rear surface (36) and the base surface (38) of said first lug (24A), crosses the groove (26) adjacent to said first lug (24A) and goes upwards along the base surface (38) and the front surface (34) of a second lug (24B) subsequent with respect to said first lug (24A), until reaching the upper surface (30) of said second lug (24B).

3. The tire (10) according to claim 1, **characterized in that** each discontinuity (42) starts at the upper surface (30) of a second lug (24B), moves downwards along the front surface (34) and the base surface (38) of said second lug (24B), crosses the groove (26) adjacent to said second lug (24B) and only partially goes upwards along the base surface (38) and the rear surface (36) of a first lug (24A) preceding said second lug (24B).

4. The tire (10) according to claim 1, **characterized in that** each discontinuity (42) starts at the upper surface (30) of a first lug (24A), moves downwards along the rear surface (36) and the base surface (38) of said first lug (24A), crosses the groove (26) adjacent to said first lug (24A) and only partially goes upwards along the base surface (38) and the front surface (34) of a second lug (24B) subsequent with respect to said first lug (24A).

5. The tire (10) according to claim 1, **characterized in that** each discontinuity (42) starts at the edge of the upper surface (30) of a second lug (24B), moves downwards along the front surface (34) and the base surface (38) of said second lug (24B) and only partially crosses the groove (26) adjacent to said second lug (24B).

6. The tire (10) according to claim 1, **characterized in that** each discontinuity (42) starts at the edge of the upper surface (30) of a first lug (24A), moves downwards along the rear surface (36) and the base surface (38) of said first lug (24A) and only partially crosses the groove (26) adjacent to said first lug (24A).

7. The tire (10) according to any one of claims 1 to 6, **characterized in that** the point of intersection (54) between each discontinuity (42) and the upper surface (30) of said first lug (24A) and/or said second lug (24B) forms a pointed edge of each lug (24A, 24B) which increases the grip and stability features of the tire (10).

8. The tire (10) according to any one of claims 1 to 7, **characterized in that** at least two discontinuities (42) are obtained on each groove (26), shaped in such a way that each of said at least two discontinuities (42) causes a progressive increase, along said longitudinal direction (Y) and starting from said circumferential centerline (M) continuing towards a respective sidewall (22), of the distance (L; L1, L2) between the rear surface (36) of said first lug (24A) and the front surface (34) of said second lug (24B).

9. The tire (10) according to claim 1, **characterized in that** each discontinuity (42) only partially crosses a respective groove (26) and only partially extends over at least one between the front surface (34) and the rear surface (36) of the lugs (24) that surround said groove (26).

**Patentansprüche**

1. Reifen (10) für Fahrzeugräder, bestehend aus einer innen hohlen und im Wesentlichen torusförmigen Struktur, die sich um eine Drehachse (A) erstreckt, die Struktur umfassend:

   - ein Paar axial gegenüberliegender Endklappen (12, 14) mit Umfangserstreckung, die angeordnet sind, um fest mit einer Felge eines Fahrzeugs einzugreifen, um zu ermöglichen, dass der Reifen (10) auf die Felge aufgezogen wird;
   - eine umlaufende Gürtelstruktur (16), die außen mit einem Laufflächenabschnitt (18) und auf der Innenseite mit einer inneren Basiswand (20) des Reifens (10) versehen ist, wobei eine Umfangsmittellinie (M) senkrecht zu der Drehachse (A) in der Mitte des Laufflächenabschnitts (18) platziert ist; und
   - ein Paar gegenüberliegender Seitenwände (22) mit Umfangserstreckung entlang einer radialen Fläche, wobei sich jede Seitenwand (22) zwischen einer jeweiligen Endklappe (12, 14) und der Gürtelstruktur (16) erstreckt, wobei der Laufflächenabschnitt (18) eine Vielzahl von Stollen (24; 24A, 24B) und eine Vielzahl von Rillen (26) umfasst, wobei jede Rille (26) zwischen aneinandergrenzende Paaren von Stollen (24; 24A, 24B) eingefügt ist und eine Umfangsfläche aufweist, und wobei jede Rille (26) in einem Abstand von der Drehachse (A) platziert ist, der geringer ist als der Abstand von jedem Stollen (24; 24A, 24B) von der Drehachse (A), wobei jeder Stollen (24; 24A, 24B) Folgendes umfasst:

   - mindestens eine obere Umfangsfläche (30), die eine vordefinierte Krümmung aufweist;
   - mindestens eine radiale vordere Fläche (34), die auf der Vorderseite eines jeweiligen Stollens (24; 24A, 24B) gemäß einer Drehrichtung (R) des Reifens (10) platziert ist;
   - mindestens eine radiale hintere Fläche (36), die auf der Rückseite eines jeweiligen Stollens (24; 24A, 24B) gemäß der Drehrichtung (R) des Reifens (10) platziert ist; und
   - mindestens eine Grundfläche (38), die jede radiale vordere Fläche (34) und jede radiale hintere Fläche (36) mit einer jeweiligen angrenzenden Rille (26) verbindet,

   wobei jede Rille (26) gemäß einem zweidimensionalen kartesischen Bezugssystem (40) entlang einer Querrichtung (X) der Rille (26), die parallel zu der Drehachse (A) ist, und entlang einer Längsrichtung (Y) der Rille (26), die senkrecht zu der Drehachse (A) verläuft, ausgerichtet ist, und wobei eine oder mehrere Diskontinuitäten (42) auf mindestens einem Teil der Rillen (26) erlangt werden, wobei jede Diskontinuität die jeweilige Rille (26) entlang einer Richtung im Wesentlichen parallel zu der Längsrichtung (Y) zumindest teilweise kreuzt, wobei der Reifen (10) **dadurch gekennzeichnet ist,**

**dass** sich jede Diskontinuität (42) ferner wiederum in einer Richtung im Wesentlichen parallel zu der Längsrichtung (Y) über mindestens einen Teil der Grundfläche (38), über mindestens einen Teil der radialen vorderen Fläche (34) und/oder über mindestens einen Teil der radialen hinteren Fläche (36) von jedem Stollen (24; 24A, 24B) angrenzend an die Rille (26), auf der die Diskontinuität (42) erlangt wird, erstreckt, wobei jede Diskontinuität (42) aus einer Stufe besteht, die mit einer flachen Wand versehen ist, die in einer radialen Ebene liegt,
wobei die flache Wand (56) eine scharfe Kante (58) mit der Fläche der Rille (26) sowie mit mindestens einem Teil der Grundfläche (38), mit mindestens einem Teil der radialen Vorderfläche (34) und/oder mit mindestens einem Teil der radialen Rückfläche (36) jedes Ansatzes (24; 24A, 24B) angrenzend an die Rille (26), auf der die Diskontinuität (42) erlangt wird, bildet, wobei die Flächenkontinuität in der Quer- (X) und/oder der Längsrichtung (Y) sowohl der Rillen (26) als auch der Grund- (38), vorderen (34) und/oder hinteren Fläche (36) der Stollen (24; 24A, 24B) unterbrochen wird.

2. Reifen (10) nach Anspruch 1, **dadurch gekennzeichnet, dass** jede Diskontinuität (42) an der oberen Fläche (30) eines ersten Stollens (24A) beginnt, sich entlang der hinteren Fläche (36) und der Grundfläche (38) des ersten Stollens (24A) nach unten bewegt, die an den ersten Stollen (24A) angrenzende Rille (26) kreuzt und entlang der Grundfläche (38) und der vorderen Fläche (34) eines zweiten Stollens (24B), der auf den ersten Stollen (24A) folgt, nach oben verläuft, bis sie die obere Fläche (30) des zweiten Stollens (24B) erreicht.

3. Reifen (10) nach Anspruch 1, **dadurch gekennzeichnet, dass** jede Diskontinuität (42) an der oberen Fläche (30) eines zweiten Stollens (24B) beginnt, sich entlang der vorderen Fläche (34) und der Grundfläche (38) des zweiten Stollens (24B) nach unten bewegt, die an den zweiten Stollen (24B) angrenzende Rille (26) kreuzt und nur teilweise entlang der Grundfläche (38) und der hinteren Fläche (36) eines ersten Stollens (24A), der dem zweiten Stollen (24B) vorausgeht, nach oben verläuft.

4. Reifen (10) nach Anspruch 1, **dadurch gekennzeichnet, dass** jede Diskontinuität (42) an der oberen Fläche (30) eines ersten Stollens (24A) beginnt, sich entlang der hinteren Fläche (36) und der Grundfläche (38) des ersten Stollens (24A) nach unten bewegt, die an den ersten Stollen (24A) angrenzende Rille (26) kreuzt und nur teilweise entlang der Grundfläche (38) und der vorderen Fläche (34) eines zweiten Stollens (24B), der in Bezug auf den ersten Stollen (24A) folgt, nach oben verläuft.

5. Reifen (10) nach Anspruch 1, **dadurch gekennzeichnet, dass** jede Diskontinuität (42) an der Kante der oberen Fläche (30) eines zweiten Stollens (24B) beginnt, sich entlang der vorderen Fläche (34) und der Grundfläche (38) des zweiten Stollens (24B) nach unten bewegt und die an den zweiten Stollen (24B) angrenzende Rille (26) nur teilweise kreuzt.

6. Reifen (10) nach Anspruch 1, **dadurch gekennzeichnet, dass** jede Diskontinuität (42) an der Kante der oberen Fläche (30) eines ersten Stollens (24A) beginnt, sich entlang der hinteren Fläche (36) und der Grundfläche (38) der ersten Stollen (24A) nach unten bewegt und die an den ersten Stollen (24A) angrenzende Rille (26) nur teilweise kreuzt.

7. Reifen (10) nach einem der Ansprüche 1 bis 6, **dadurch gekennzeichnet, dass** der Schnittpunkt (54) zwischen jeder Diskontinuität (42) und der oberen Fläche (30) des ersten Stollens (24A) und/oder des zweiten Stollens (24B) eine spitze Kante von jedem Stollen (24A, 24B) bildet, die die Griff- und Stabilitätseigenschaften des Reifens (10) steigert.

8. Reifen (10) nach einem der Ansprüche 1 bis 7, **dadurch gekennzeichnet, dass** mindestens zwei Diskontinuitäten (42) an jeder Rille (26) erlangt werden, die geformt sind, sodass jede der mindestens zwei Diskontinuitäten (42) eine progressive Vergrößerung des Abstands (L; L1, L2) zwischen der hinteren Fläche (36) des ersten Stollens (24A) und der vorderen Fläche (34) des zweiten Stollens (24B) entlang der Längsrichtung (Y) und ausgehend von der Umfangsmittellinie (M), die sich zu einer jeweiligen Seitenwand (22) fortsetzt, bewirkt.

9. Reifen (10) nach Anspruch 1, **dadurch gekennzeichnet, dass** jede Diskontinuität (42) eine entsprechende Rille (26) nur teilweise kreuzt und sich nur teilweise über mindestens eine von der vorderen Fläche (34) und der hinteren Fläche (36) der Stollen (24) erstreckt, die die Rille (26) umgeben.

**Revendications**

1. Pneu (10) pour roues de véhicule, constitué d'une structure creuse à l'intérieur et sensiblement toroïdale qui s'étend autour d'un axe de rotation (A), ladite structure comprenant:

    - une paire de rabats d'extrémité (12, 14) opposés de manière axiale avec une extension circonférentielle, qui sont agencés pour s'engager étroitement avec une jante d'un véhicule afin de permettre au pneu (10) d'être monté sur ladite jante;
- une structure de ceinture (16) circonférentielle, pourvue à l'extérieur d'une partie de bande de roulement (18) et à l'intérieur d'une paroi de base interne (20) du pneu (10), dans laquelle une ligne centrale circonférentielle (M), perpendiculaire audit axe de rotation (A), est placée au centre de ladite partie de bande de roulement (18); et
- une paire de parois latérales (22) opposées s'étendant de manière circonférentielle le long d'une surface radiale, dans laquelle chaque paroi latérale (22) s'étend entre un rabat d'extrémité (12, 14) respectif et ladite structure de ceinture (16),
dans lequel ladite partie de bande de roulement (18) comprend une pluralité de crampons (24; 24A, 24B) et une pluralité de rainures (26), dans lequel chaque rainure (26) est interposée entre des paires contiguës de crampons (24; 24A, 24B) et présente une surface circonférentielle, et dans laquelle chaque rainure (26) est placée à une distance dudit axe de rotation (A) qui est inférieure à la distance de chaque crampon (24; 24A, 24B) par rapport audit axe de rotation (A), dans laquelle chaque crampon (24; 24A, 24B) comprend:

- au moins une surface supérieure (30) circonférentielle, qui présente une courbure prédéfinie;
- au moins une surface frontale (34) radiale, disposée sur le côté avant d'un crampon (24; 24A, 24B) respectif en fonction d'un sens de rotation (R) du pneu (10);
- au moins une surface arrière (36) radiale, disposée sur le côté arrière d'un crampon (24; 24A, 24B) respectif en fonction dudit sens de rotation (R) du pneu (10); et
- au moins une surface de base (38), qui relie chaque surface frontale (34) radiale et chaque surface arrière (36) radiale à une rainure (26) adjacente respective,

dans lequel chaque rainure (26) est orientée selon un système de référence cartésien bidimensionnel (40) le long d'une direction transversale (X) de la rainure (26), qui est parallèle audit axe de rotation (A), et le long d'une direction longitudinale (Y) de la rainure (26), qui est perpendiculaire audit axe de rotation (A), et dans lequel une ou plusieurs discontinuités (42) sont obtenues sur au moins une partie desdites rainures (26), dans lequel chaque discontinuité traverse au moins en partie la rainure (26) respective le long d'une direction sensiblement parallèle à ladite direction longitudinale (Y), le pneu (10) étant **caractérisé en ce que** chaque discontinuité (42) s'étend en outre, à nouveau le long d'une direction sensiblement parallèle à ladite direction longitudinale (Y), sur au moins une partie de la surface de base (38), sur au moins une partie de la surface frontale (34) radiale et/ou sur au moins une partie de la surface arrière (36) radiale de chaque crampon (24; 24A, 24B) adjacente à la rainure (26) sur laquelle ladite discontinuité (42) est obtenue, dans lequel chaque discontinuité (42) est constituée d'un gradin qui comprend une paroi plate reposant sur un plan radial, et dans lequel ladite paroi plate (56) forme une arête vive (58) avec la surface de ladite rainure (26), ainsi qu'avec au moins une partie de la surface de base (38), avec au moins une partie de la surface frontale (34) radiale et/ou avec au moins une partie de la surface arrière (36) radiale de chaque crampon (24; 24A, 24B) adjacent à la rainure (26) sur laquelle ladite discontinuité (42) est obtenue, interrompant la continuité de surface dans lesdites directions transversale (X) et/ou longitudinale (Y) à la fois des rainures (26) et des surfaces de base (38), frontale (34) et/ou arrière (36) desdits crampons (24; 24A, 24B).

2. Pneu (10) selon la revendication 1, **caractérisé en ce que** chaque discontinuité (42) commence à la surface supérieure (30) d'un premier crampon (24A), se déplace vers le bas le long de la surface arrière (36) et de la surface de base (38) dudit premier crampon (24A), traverse la rainure (26) adjacente audit premier crampon (24A) et remonte le long de la surface de base (38) et de la surface frontale (34) d'un deuxième crampon (24B) postérieur audit premier crampon (24A), jusqu'à atteindre la surface supérieure (30) dudit deuxième crampon (24B).

3. Pneu (10) selon la revendication 1, **caractérisé en ce que** chaque discontinuité (42) commence à la surface supérieure (30) d'un deuxième crampon (24B), se déplace vers le bas le long de la surface frontale (34) et de la surface de base (38) dudit deuxième crampon (24B), traverse la rainure (26) adjacente audit deuxième crampon (24B) et ne remonte qu'en partie le long de la surface de base (38) et de la surface arrière (36) d'un premier crampon (24A) précédant ledit deuxième crampon (24B).

4. Pneu (10) selon la revendication 1, **caractérisé en ce que** chaque discontinuité (42) commence à la surface supérieure (30) d'un premier crampon (24A), se déplace vers le bas le long de la surface arrière (36) et de la surface de base (38) dudit premier crampon (24A), traverse la rainure (26) adjacente audit premier crampon (24A) et ne remonte qu'en partie le long de la surface de base (38) et de la surface frontale (34) d'un deuxième crampon (24B) postérieur audit premier crampon (24A).

5. Pneu (10) selon la revendication 1, **caractérisé en ce que** chaque discontinuité (42) commence au bord de la surface supérieure (30) d'un deuxième crampon (24B), se déplace vers le bas le long de la surface frontale (34) et de la surface de base (38) dudit deuxième crampon (24B) et ne traverse qu'en partie la rainure (26) adjacente audit deuxième crampon (24B).

6. Pneu (10) selon la revendication 1, **caractérisé en ce que** chaque discontinuité (42) commence au bord de la surface supérieure (30) d'un premier crampon (24A), se déplace vers le bas le long de la surface arrière (36) et de la surface de base (38) dudit premier crampon (24A) et ne traverse qu'en partie la rainure (26) adjacente audit premier crampon (24A).

7. Pneu (10) selon l'une quelconque des revendications 1 à 6, **caractérisé en ce que** le point d'intersection (54) entre chaque discontinuité (42) et la surface supérieure (30) dudit premier crampon (24A) et/ou dudit deuxième crampon (24B) forme un bord pointu de chaque crampon (24A, 24B) qui augmente les caractéristiques d'adhérence et de stabilité du pneu (10).

8. Pneu (10) selon l'une quelconque des revendications 1 à 7, **caractérisé en ce qu'**au moins deux discontinuités (42) sont obtenues sur chaque rainure (26), formées de telle manière que chacune desdites au moins deux discontinuités (42) provoque une augmentation progressive, le long de ladite direction longitudinale (Y) et à partir de ladite ligne centrale circonférentielle (M) en continuant vers une paroi latérale (22) respective, de la distance (L; L1, L2) entre la surface arrière (36) dudit premier crampon (24A) et la surface frontale (34) dudit deuxième crampon (24B).

9. Pneu (10) selon la revendication 1, **caractérisé en ce que** chaque discontinuité (42) ne traverse qu'en partie une rainure (26) respective et ne s'étend qu'en partie sur au moins une entre la surface frontale (34) et la surface arrière (36) des crampons (24) qui entourent ladite rainure (26).

**Fig. 1**

*Fig. 2*

**Fig. 3**

Fig. 4

**Fig. 5**

**Fig. 6**

44A

44B

A-A  B-B

46A

46B

**Fig. 7A**

50    L1    L2    48

A
B

H1

H2

A
B

52

**Fig. 7B**

EP 4 551 412 B1

*Fig. 8*

**Fig. 9**

**Fig. 10**

*Fig. 11*

*Fig. 12*

**EP 4 551 412 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 210211917 U
- CN 206765716 U
- EP 2658732 A1
- EP 2531362 A1
- JP 2007168684 A
- EP 1266771 A1
- JP 2012076656 A
- US 4131148 A
- US 2017246914 A1
- US D908598 S